# EUROPEAN PATENT APPLICATION

(11) **EP 4 733 899 A1**
(43) Date of publication of application: **29.04.2026**
(21) Application number: 24306800.4
(22) Date of filing: 25.10.2024
(51) Int. Cl.: G06F 3/01

(54) **NOISE BAND FOR MPEG HAPTIC FORMAT**

(71) Applicant: InterDigital CE Patent Holdings, SAS, 75017 Paris (FR)
(72) Inventor: LECUYER, Gurvan, 35000 RENNES (FR); GALVANE, Quentin, 35235 THORIGNE-FOUILLARD (FR); GUILLOTEL, Philippe, 35770 VERN SUR SEICHE (FR)
(74) Representative: Vossius & Partner Patentanwälte Rechtsanwälte mbB

(57) **Abstract**

Some embodiments of a method may include: obtaining information describing a haptic noise function; generating a noise data structure corresponding to the haptic noise function, wherein the noise data structure complies with a generic noise model, and wherein the generic noise model comprises identification of the haptic noise function and a set of one or more parameters associated with the haptic noise function; and storing the noise data structure in a memory location.

## Description

### INCORPORATION BY REFERENCE

The present application incorporates by reference in their entirety the following applications: U.S. Provisional Patent Application Serial No. 63/526,954, entitled "DASH SIGNALING FOR ADAPTIVE STREAMING OF HAPTICS MEDIA" and filed July 14, 2023 ("'954 application"); International Patent Application Serial No. PCT/US2024/037634, entitled "DASH SIGNALING FOR ADAPTIVE STREAMING OF HAPTICS MEDIA" and filed July 11, 2024 ("`634 application"); and European Patent Application Serial No. TBD, entitled "DEFINING HAPTIC DATA USING PROBABILISTIC SPACE" and filed October 25, 2024.

### BACKGROUND

The present application is related to MPEG haptic coding.

### SUMMARY

An example method in accordance with some embodiments may include: obtaining information describing a haptic noise function; generating a noise data structure corresponding to the haptic noise function, wherein the noise data structure complies with a generic noise model, and wherein the generic noise model comprises identification of the haptic noise function and a set of one or more parameters associated with the haptic noise function; and storing the noise data structure in a memory location.

Some embodiments of the example method further include sending at least a portion of the noise data structure to an external device.

Some embodiments of the example method further include generating a noise signal corresponding to the haptic noise function.

Some embodiments of the example method further include combining the noise signal with a haptic signal.

Some embodiments of the example method further include encoding the noise signal.

For some embodiments of the example method, a noise type of the haptic noise function comprises one of random noise, Gaussian noise, value noise, Perlin noise, Simplex noise, Open Simplex noise, and Voronoi noise.

For some embodiments of the example method, the set of one or more parameters comprises at least one of a seed, a duration, a number of samples, and an amplitude of the haptic noise function.

For some embodiments of the example method, the information comprises a noise band type at a haptic band data structure level.

For some embodiments of the example method, the information comprises a noise effect type at a haptic effect data structure level.

For some embodiments of the example method, the information describing the haptic noise function comprises one or more data parameters corresponding to the haptic noise function.

For some embodiments of the example method, the noise data structure comprises a data object structure, the data object structure comprises one or more data elements, and the one or more data elements comprise one or more items of a set comprising noise type, seed value, duration, sample count, and amplitude corresponding to the haptic noise function.

For some embodiments of the example method, the one or more data elements comprise one or more items of a second set comprising frequency, noise color, number of interpolation steps, number of octaves, and interpolation type.

For some embodiments of the example method, the noise data structure complies with a JSON-based structure scheme.

For some embodiments of the example method, the noise data structure complies with an MPEG-based haptic standard.

An example apparatus in accordance with some embodiments may include: a processor; and a memory storing instructions operative, when executed by the processor, to cause the apparatus to perform the method of any one of the claims listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a data packaging diagram showing an example MPEG haptics data structure according to some embodiments.
FIG. 3 is a signal structure diagram illustrating an example composition of a haptic signal according to some embodiments.
FIG. 4 is a process diagram illustrating an example haptic encoder architecture process according to some embodiments.
FIG. 5 is a flowchart illustrating an example process for generating a haptic noise data structure according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

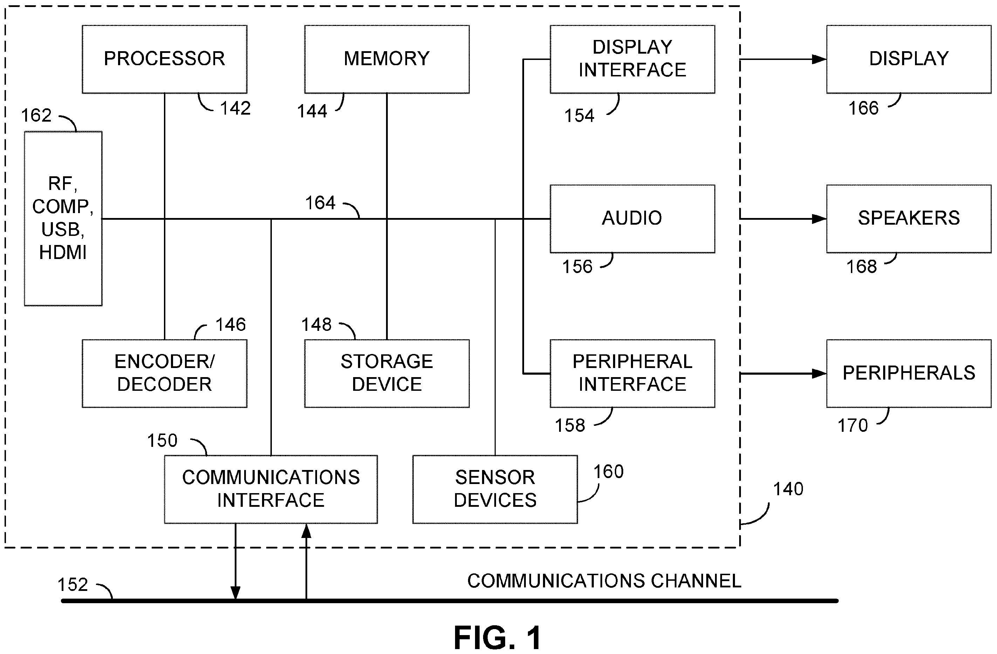

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

With the on-going MPEG standardization process on the coded representation of haptics, a new haptic coding format is being defined. A coding format and encoder are described herein for some embodiments.

### MPEG Haptic File Format

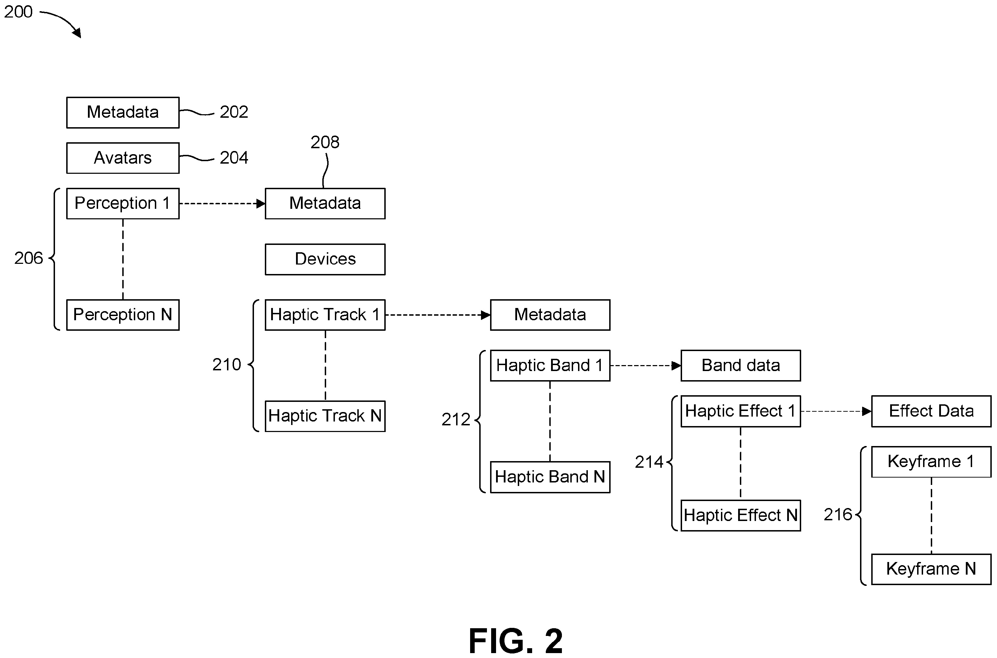

FIG. 2 is a data packaging diagram showing an example MPEG haptics data structure according to some embodiments. FIG. 2 shows an example haptics data hierarchy 200. The data structure of two haptic codec formats follows the hierarchical organization illustrated in FIG. 2.

The highest level of the structure describes the entire haptic experience defined in the file or stream. This highest level contains some high-level metadata information 202 regarding the overall haptic experience and provides a list of avatars 204 and/or body representations that may be referenced to specify a desired location of haptic stimuli on the body. The haptic data itself is described through a list of perceptions 206. These perceptions 206 correspond to haptic signals associated with specific perception modalities (e.g., vibration, force, position, velocity, and temperature).

In addition to perception-specific metadata 208, a perception may include a list of channels (or tracks 210) in which the data is decomposed into frequency bands. Each band 212 defines part of the signal in a given frequency range. The bands 212 are described with a list of haptic effects 214, each including a list of keyframes 216. The haptic signal in a channel may be reconstructed by combining the data in the different bands (e.g., by adding high and low frequency bands).

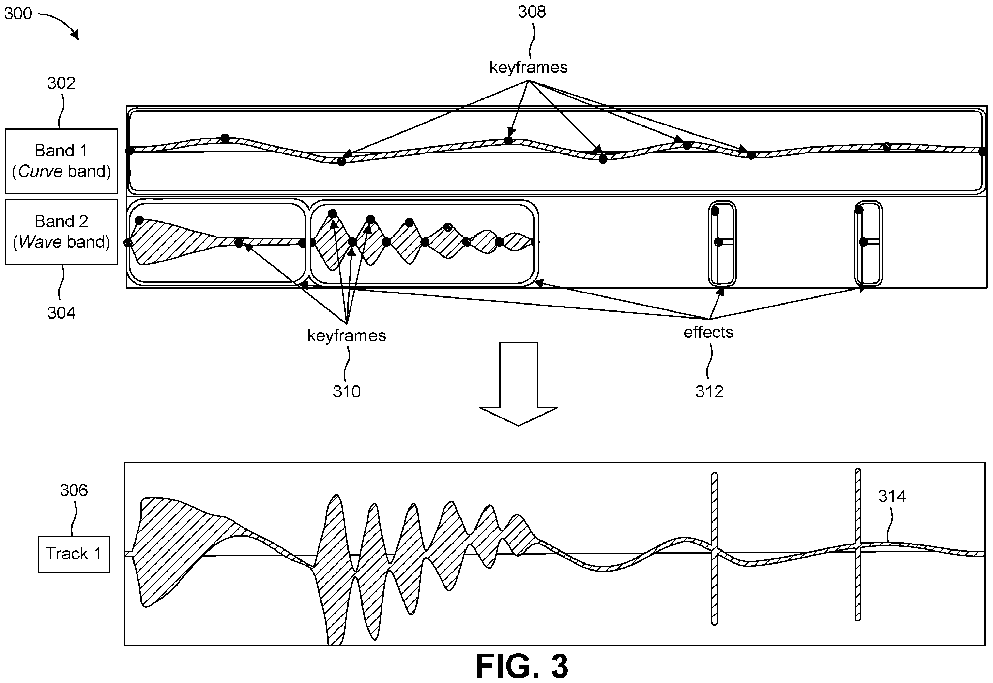

FIG. 3 is a signal structure diagram illustrating an example composition of a haptic signal according to some embodiments. A perception contains a list of tracks where the data is decomposed into frequency bands. Each band defines part of the signal in a given frequency range. The band itself is described with a list of haptic effects 312 each containing a list of keyframes 308, 310. The haptic signal in a track, such as Track 1 (306) of the example scenario 300 shown in FIG. 3, may be reconstructed by combining the data in the different bands. FIG. 3 illustrates how a haptic signal 314 may be decomposed into two frequency bands 302, 304. By adding the high and low frequency bands 302, 304, the original signal 314 for an example Track 1 (306) may be reconstructed.

For some embodiments, the format has four types of haptic bands: transient bands, curve bands, vectorial bands, and wavelet bands. Each band is composed of a series of "effects" each defined by a list of "keyframes". The data contained in the effects 312 and keyframes 308, 310 is interpreted differently for different types of haptic bands and encoding modalities.

For a transient band, each effect stores a set of keyframes defining a position, an amplitude, and a frequency. A keyframe represents a transient event. For a curve band, each effect stores a set of keyframes defining a position and an amplitude. The keyframes represents the control points of the curve. The type of interpolation function (cubic or linear) used to generate the band is specified in the metadata of the band. For vectorial bands, the effect stores a set of keyframes defining a position, an amplitude and a frequency. For wavelet bands, the effect stores the contents of one wavelet block binary stream. For some embodiments, a wavelet wave hand contains a keyframe for every coefficient of the wavelet transformed and quantized signal, with only the amplitude value used. The coefficients are scaled to a range of [-1,1]. Additionally, the original maximum amplitude is stored in a keyframe, as well as the maximum number of bits used.

### MPEG Encoder

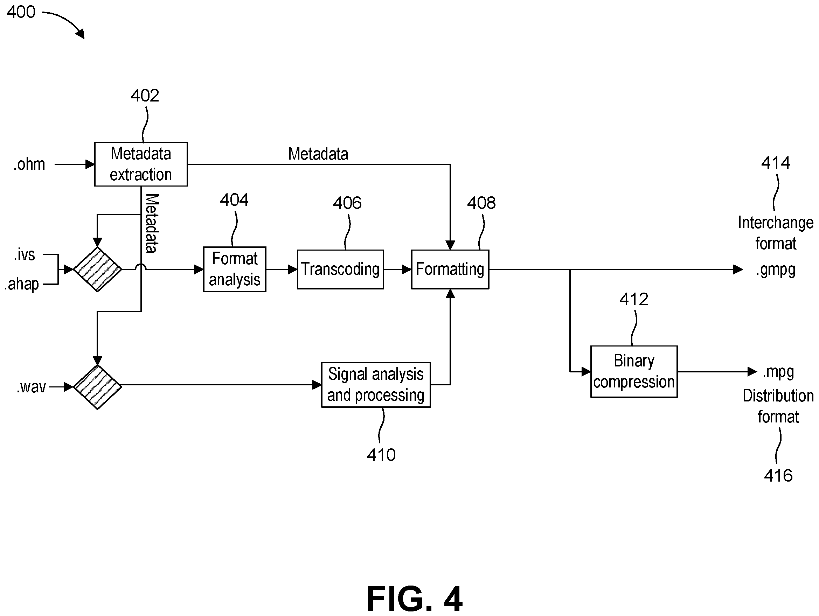

FIG. 4 is a process diagram illustrating an example haptic encoder architecture process according to some embodiments. The overall architecture 400 of the agreed upon encoder is illustrated in FIG. 4. The encoded signal may be exported either as a JSON (human readable) interchange format 414 or as a compressed binary distribution format 416 generated by a binary compression process 412 for some embodiments..

The encoding process may take as input either descriptive haptics files (.ivs and .ahap) or waveform PCM files (.wav). The encoding of these two types of file formats follows two distinct approaches. For descriptive input files, the encoder performs format analysis 404 to analyze the data and then a transcoding process 406 transcodes the data directly to the MPEG format 408. For waveform signals, the data is processed using a frequency bands decomposition process 410 to perform more common signal analysis methods to generate keyframes and either interpole between keyframes or use wavelet coding (based on SPITH) to generate a binary encoded stream for some embodiments.

For some embodiments, an .ohm file is received and processed by a metadata extraction process 402 to extract metadata from the file. The metadata may be sent to a formatting process 408 for further processing.

### Problem Statement

Haptic signal may be referred to as time series just like audio. A major difference is that audio is most of the time recorded from real world data stored as PCM data while haptic data are generally synthetic signal created using dedicated system and stored using parametric data. The created haptic signals are a symbolic representation of a real-life interaction and not a realistic reproduction of the expected feeling. The creator of the haptic symbolic representation relies mostly on artistic choices but also takes advantage of shared knowledge with related fields, such as FX design. One FX design technique uses random signals to create a more natural feeling and to break the monotony. While this technique has spread to the audio community, this technique is also working into haptic signal design.

Encoding noise in traditional audio codec is costly. Noisy signals have great entropy value, which results in a high bitrate file to keep a good quality signal. For both parametric and PCM data, storing noise results in high bit costs. In the context of the MPEG Haptic standard, noise requires a high number of keyframes to be accurately represented using the data-structure shown in FIG. 2.

Random noise may be generally generated using an algorithm such as Perlin noise or Gaussian noise, for example. These algorithms may be seeded, which means that given a seed and a set of parameters, the algorithm always generates the same output signal. Noise algorithms may be characterized using different sets of parameters, mainly float parameters, that may be used to generate the noise. A generic noise model allows definition of a noise signal based on these different noise algorithms. The associated data-structure is defined to store the information in a haptic data file to be shared and synthesized without the need for storing the entire noisy signal.

### Generic Noise Model

Noise may be described using a function and its parameters, and a duration. The following list shows noise functions that may be used but the scope of the application is not limited to those mentioned: Random noise (color of noise), Gaussian, Value, Perlin, Simplex, OpenSimplex, and Voronoi.

Noise functions may be seeded, meaning that, given a seed, the response of the algorithm is ensured to be the same. The use of seeded functions is particularly important in for a haptic signal to be synthesized and stable each time. In the latter case, the use of seeded noise function still provides an efficient way to store the noise regarding the bitstream, while ensuring a fast synthesis of the haptic signal to render. On the contrary, if the seed is not stored, or transmitted, the haptic signal will vary each time the haptic signal is synthesized. This feature may be useful in some use cases, such as video games in which variations may add some organic feeling to the experience by avoiding the repetitiveness of a single effect.

Table 1 shows the representation of possible noise functions that may be used along with their associated parameters.

**Table 1.**

| **Noise Function** | **Parameters** | | | | | | |
|---|---|---|---|---|---|---|---|
| Random (Color of Noise) | Seed | Duration | Number of Samples | Amplitude | Frequency | Color (See Table 3) | - |
| Gaussian | | | | | - | - | - |
| Value | | | | | Number of Steps | - | - |
| Perlin | | | | | Frequency | Number of Octaves | Interpolation Type (See Table 2) |
| Simplex | | | | | | | - |
| OpenSimplex | | | | | | | - |
| Voronoi | | | | | | - | - |

Table 2 shows a list of possible interpolation types.

**Table 2.**

| **Interpolation Type** |
|---|
| Linear |
| Cubic |
| Cosine |
| Hermite |

Table 3 shows a list of possible colors for the color of a noise function.

**Table 3.**

| **Color of Noise** |
|---|
| White |
| Pink |
| Brownian |
| Blue |
| Purple |
| Grey |
| Velvet |

Given the different noise representations detailed in Table 1, a generic noise model may be defined for haptics through a haptic noise function data structure as shown in Table 4.

**Table 4.**

| **Field** | **Description** | |
|---|---|---|
| Noise Function | The noise function to use for generating the signal. Possible values are: | |
| | | - Random (color of noise) |
| | | - Gaussian |
| | | - Value |
| | | - Perlin |
| | | - Simplex |
| | | - OpenSimplex |
| | | - Voronoi |
| Seed | Optional parameter for some embodiments. If provided, the seed will be used to seed the random signal generator. Otherwise, a random seed will be used so that the resulting noise signal will vary each time the noise signal is generated. | |
| Duration | The duration of the noise to generate. | |
| Number of Samples | The number of keyframes to generate. | |
| Amplitudes | The maximum amplitude for the signal to generate | |
| Frequency | Only if the noise function is either "Random", "Perlin", "Simplex", "OpenSimplex", or "Voronoi" it is the frequency of the signal generated. | |
| Color | Only if noise function is "Random". The color of the noise to be used, possible values are: | |
| | | - White |
| | | - Pink |
| | | - Brownian |
| | | - Blue |
| | | - Purple |
| | | - Grey |
| | | - Velvet |
| Number of Steps | Only if the noise function is "Value", this parameter is the number of steps to use for interpolating between two values. | |
| Number of Octaves | Number of octaves to use. If 1, it is noise composed of only one signal. Otherwise, it is a layered noise that is an addition of several signal with different frequency, or number of steps. | |
| Interpolation Type | Only if the noise function is "Perlin", the interpolation method to use to interpolate between the randomly generated value. The possible values are: | |
| | | - Linear |
| | | - Cubic |
| | | - Cosine |
| | | - Hermite |

In the context of the MPEG haptic standard, a new object for the data structure presented in FIG. 2 may be presented. Table 4 shows a haptic noise function object and its parameters.

### First Method

In the scope of the MPEG Haptic standard, *Text of ISO*/*IEC FDIS 23090-31 MPEG Haptics Coding,* ISO/IEC JTC 1/SC 29/WG 7, N00832, 23090-31, (Jan. 2024) ("*ISO*/*IEC 23090-31*") noise information may be included at the band level. The current MPEG Haptic specification define different types of haptic bands. Curve band represent haptic signals with curves and are described by a set of control points and a type of interpolation in-between. Transient bands represent short momentary haptic effects and are described with amplitude and frequency parameters. Vectorial wave bands represent parametric haptic effects and are described by a vector of parameters including temporal or spatial position, amplitude, and frequency. The model allows both amplitude and frequency modulation of the signal. Wavelet wave bands represent haptic effects encoded with wavelet transform decomposition, quantization, binary tree structure, and entropy coding.

A noise band type may be added to the MPEG Haptic standard *ISO*/*IEC 23090-31.* The noise band type may include information on the algorithm to generate the noise. Table 5 shows modifications and additions for the MPEG Haptic Band.

**Table 5.**

| **Property** | **Description** | |
|---|---|---|
| Band Type | Type of data contained in the band. There are five types of haptic bands: curve bands, transient bands, vectorial wave bands, wavelet wave bands, and noise bands. For each type of band, the information it contains has a different meaning: | |
| | Curve bands represent haptic signals with curves, described by a set of control points and a type of interpolation in-between. | |
| | Transient bands represent short momentary haptic effects, described with amplitude and frequency parameters. | |
| | Vectorial wave bands represent parametric haptic effects; described by a vector of parameters including temporal or spatial position, amplitude and frequency. The model allows both amplitude and frequency modulation of the signal. | |
| | Wavelet wave bands represent haptic effects encoded with wavelet transform decomposition, quantization, binary tree structure, and entropy coding. | |
| | Noise bands represent haptic effect encoded using a noise function, described with a seed, a duration of the noise, number of samples to generate, and amplitude and other parameters specific to the different noise function defined in Table 1. | |
| Priority | Importance of the band for scalability. A lower value indicates higher priority. Given a limited bandwidth, decoders may ignore perception with a higher priority value. | |
| Curve Type | Present only for curve bands. This specifies the interpolation method to be used to synthetize the haptic signal of the band. Possible values are: | |
| | | - Linear |
| | | - Cubic |
| | | - Akima |
| | | - Bézier |
| | | - B-spline |
| | | - Unknown (for application specific functions) |
| Block Length | This property is only present for wavelet wave bands. It is the duration of a wavelet block. | |
| Lower Frequency Limit | Lower frequency limit of the band (Hz). | |
| Upper Frequency Limit | Upper frequency limit of the band (Hz). | |
| Haptic Noise Function | The Haptic noise function object to be used for generating the noise band as described in Table 4. | |
| Effects | List of haptic effects. If the effect list is empty, the band does not contain haptic data. | |

### Second Method

The current MPEG haptic specification defines the haptic effect at a lower level in the data structure. There are currently three effect types that are defined in the specification: basis effect, composite effect, and reference effect.

A noise effect type may be defined which includes information on the algorithm used to generate the noise. Table 6 shows modifications and additions for the MPEG Haptic Effect.

**Table 6.**

| **Property** | **Description** | |
|---|---|---|
| Id | Unique ID of the effect. This property is required for effects defined at the perception level in the library and for reference effects. For reference effects, this property corresponds to the ID of the library effect being referenced. The ID is unique among all effect IDs in this haptic experience. | |
| Effect Type | Type of haptic effect. Possible values are: | |
| | Basis: Effect containing signal data defined through a set of keyframes. | |
| | Composite: Effect composed of a set of other effects defined in the composition property. This type of effect does not directly contain keyframes. | |
| | Reference: Effect referencing an effect in the library. This type of effect is used at the band level to reference effects defined at the perception level in the effect library using a unique ID. | |
| | Noise: Effect generated using the specified noise function using the associated parameters. | |
| | This type of effect does not directly contain keyframes. | |
| Semantic Keywords | Semantic keywords of the haptic effect. It is an optional field that may be added to an effect. | |
| Position | Indicates the temporal or spatial position of the effect. The value 0 corresponds to the starting position of the experience. The default unit for temporal haptic feedback will be milliseconds while it will be millimetres for spatial haptic feedback. Temporal or spatial is defined by the perception Modality. | |
| Phase | Indicates the phase of the effect in radian in the range [0,2π], This value is used only for vectorial wave bands and is ignored in effects stored inside a band of a different type. | |
| Base Signal | This property is only used for vectorial wave bands. It defines the type of waveform signal to be used by the synthesizer. Possible values are: | |
| | | - Sine |
| | | - Square |
| | | - Triangle |
| | | - Sawtooth up |
| | | - Sawtooth down |
| Composition | This property may only be used with composite effects. It contains a sub-list of effects. | |
| Haptic Noise Function | The Haptic noise function object to be used for generating the noise. | |
| keyframes | List of keyframes. The keyframes list is only used for basis effects. | |
| Wavelet Stream | Encoded wavelet stream. | |

For some embodiments, the amplitude and frequency of keyframes may be used to modulate / overwrite the amplitude and frequency property of a signal.

### Implementation for MPEG

In the scope of the MPEG haptic standard, the haptic noise function object (e.g., MPEG_haptics.noiseFunction) may be implemented as seen in Table 7.

**Table 7.**

| **Property** | **Type** | **Default** | **Description** | | **Required** |
|---|---|---|---|---|---|
| noise_type | enum <string> | N/A | The noise function to use for generating the signal. Possible values are: | | Yes |
| | | | | - "Random" | |
| | | | | - "Gaussian" | |
| | | | | - "Value" | |
| | | | | - "Perlin" | |
| | | | | - "Simplex" | |
| | | | | - "OpenSimplex" | |
| | | | | - "Voronoi" | |
| seed | integer | N/A | Optional parameter. If provided, the seed will be used to seed the random signal generator. Otherwise a random seed will be used so that the resulting noise signal will vary each time it is generated. | | No |
| duration | integer | N/A | The duration of the noise to generate. Minimum value is 0. | | Yes |
| samples_count | integer | N/A | The number of keyframes to generate. | | Yes |
| amplitude | integer | 1 | The maximum amplitude for the signal to generate | | No |
| frequency | integer | N/A | Only if the noise_type is either "Random", "Perlin", "Simplex", "OpenSimplex", or "Voronoi" it is the frequency of the signal generated. | | Conditional |
| color | enum <string> | "White" | Only if noise_type is "Random". Possible values are: | | Conditional |
| | | | | - "White" | |
| | | | | - "Pink" | |
| | | | | - "Brownian" | |
| | | | | - "Blue" | |
| | | | | - "Purple" | |
| | | | | - "Grey" | |
| | | | | - "Velvet | |
| steps_count | integer | N/A | Only if the noise_type is "Value", this parameter is the number of steps to use for interpolating between to values. | | Conditional |
| octaves_count | integer | 1 | Number of octaves to use. If 1, it is a noise composed of only one signal, otherwise it is a layered noise that is an addition of several signal with different frequency, or number of steps. | | No |
| interpolation_type | enum <string> | "Linear" | Only if the noise_type is "Perlin", the interpolation method to use to interpolate between the randomly generated value. The possible values are: | | conditional |
| | | | | - Linear | |
| | | | | - Cubic | |
| | | | | - Cosine | |
| | | | | - Hermite | |

Code Listing 1 shows an example JSON schema for representing the MPEG_haptics.noiseFunction object.

| |
|---|
| ```
 {
       "$schema":"http://json-schema.org/draft-04/schema",
       "title":"MPEG_haptics_noiseFunction",
       "type":"object",
       "properties":{
             "noise_type": {
                   "type": "string",
                   "enum": ["Random", "Gaussian", "Value", "Perlin",
 "Simplex", "OpenSimplex", "Voronoi"],
                   "description": "Specifies the type of noise function
 to use for generating the noise signal",
                   "description": "White"
             },
``` |
| ```
             " seed ":{
                   "type":"integer",
                   "description": "if specified, seed to be used by the
 random number generator"
             },
             "duration":{
                   "type":"integer",
                   "description":"duration of the signal to generate",
                   "minimum": 0
             },
             "samples_count": {
                   "type": "integer",
                   "description": " The number of keyframes to generate."
             },
             "amplitude": {
                   "type": "integer",
                   "description": " The maximum amplitude for the signal
 to generate ",
                   "default": 1
             },
             "frequency ": {
                   "type": "integer",
                   "description": " Only if the noise_type is either
 "Random", "Perlin", "Simplex", "OpenSimplex", or "Voronoi" it is
 the frequency of the signal generated. "
             },
       },
             "color": {
                   "type": "string",
                   "enum": ["White", "Pink", "Brownian", "Blue",
 "Purple", "Grey", "Velvet"],
``` |
| ```
                   "description": " Only if noise_type is "Random".
 Defined the color of the noise to use for the noisy signal."
             },
             "steps_count": {
                   "type": "integer",
                   "description": " Only if the noise_type is "Value",
 this parameter is the number of steps to use for interpolating
 between to values. "
             },
             " octaves_count ": {
                   "type": "integer",
                   "description": "Number of octaves to use. If 1, it is
 a noise composed of only one signal, otherwise it is a layered
 noise that is an addition of several signal with different
 frequency, or number of steps. ",
                   "default": 1
             },
             "interpolation_type": {
                   "type": "string",
                   "enum": ["Linear", "Cubic", "Cosine", "Hermite"],
                   "description": " Only if the noise_type is "Perlin",
 the interpolation method to use to interpolate between the randomly
 generated value.",
                   "default": "Linear"
             },
       "required":[
             "noise_type",
             "duration",
             "samples_count"
       ]
       }
 }
``` |

### Code Listing 1.

The MPEG_haptics.noiseFunction object may be stored using a binary stream for some embodiments.

### First Method

In the first method, the MPEG_haptics.noiseFunction object may be embedded in the MPEG_haptics.band object. Table 8 shows such an implementation of the MPEG_haptics.band object.

**Table 8.**

| **Property** | **Type** | **Default** | **Description** | | **Required** |
|---|---|---|---|---|---|
| band_type | enum<string> | N/A | Indicates the type of data contained in the band. | | Yes |
| | | | Possible values are: | | |
| | | | | - "WaveletWave" | |
| | | | | - "VectorialWave" | |
| | | | | - "Curve" | |
| | | | | - "Transient" | |
| | | | | - "Noise" | |
| priority | integer | 255 | Importance of the band for scalability. A lower value indicates higher priority. The value shall be equal to or greater than zero. Given a limited bandwidth, decoders may ignore perception with a higher priority value. | | No |
| curve_type | enum<string> | Linear | Indicates the type of interpolation function that should be used by the synthesizer. Possible values are: | | No |
| | | | | - "Linear" | |
| | | | | - "Cubic" | |
| | | | | - "Akima" | |
| | | | | - "Bezier" | |
| | | | | - "BSpline" | |
| | | | | - "Unknown" | |
| block_length | integer | N/A | Number of samples of a wavelet effect block. The duration of this block is derived from the 23sampling frequency of the channel. This property is required when *band_type* is equal to "WaveletWave". The value shall be greater than 16 and be a power of 2. | | Conditional |
| lower_ frequency_ limit | number | N/A | Lower frequency limit of the band (Hz). The value should be in the range [0,10000]. | | Yes |
| upper_ frequency_ limit | number | N/A | Indicates the upper frequency limit of the band (Hz). The value should be in the range [0,10000]. | | Yes |
| noise_function | M PEG _haptics _noise _function | N/A | The noise function object uses to generate the band signal if band_type is "Noise" | | Conditional |

| **Property** | **Type** | | **Default** | **Description** | **Required** |
|---|---|---|---|---|---|
| effects | array<MPEG_haptics_effect> | | N/A | List of MPEG_haptics.effect. If the effects array is empty, the band does not contain haptic data. | Yes |

Code Listing 2 shows an example JSON schema associated with Table 8.

| |
|---|
| ```
 {
       "$schema" : "http://json-schema.org/draft-04/schema",
       "title" : "MPEG_haptics_band",
       "type" : "object",
       "properties" : {
             "band_type": {
                   "type": "string",
                   "enum": ["WaveletWave", "VectorialWave", "Curve",
 "Transient"],
                   "description": "Specifies the type of data contained
 in the band"
             },
             "priority": {
                   "type": "integer",
                   "description": "Importance of the band",
                   "minimum": 0,
                   "default": 255
             },
             "curve_type": {
                   "type": "string",
                   "enum": ["Linear", "Cubic", "Akima", "Bezier",
 "BSpline", "Unknown"],
                   "description": "Specifies the interpolation function
 used if the current band_type is Curve"
             },
             "block_length": {
``` |
| ```
                   "type": "integer",
                   "description": "Duration of a wavelet haptic effect",
                   "minimum": 16
             },
             "lower_frequency_limit": {
                   "type": "number",
                   "description": "Lower frequency limit of the band",
                   "minimum": 0.0,
                   "maximum": 10000.0
             },
             "upper_frequency_limit": {
                   "type": "number",
                   "description": "Upper frequency limit of the band",
                   "minimum": 0.0,
                   "maximum": 10000.0
             },
             "Haptic_noiseFunction": {
                   "type": "object",
                   "$ref": "MPEG_haptics.noiseFunction.schema.json"
                   "description": "The noise function object used to
 generate the band signal if band_type is "Noise""
             }
             "effects": {
                   "type": "array",
                   "description": "List of streams",
                   "items": {
                         "type": "object",
                         "$ref": "MPEG_haptics.effect.schema.json"
                   }
             }
       },
       "required": [
             "band_type",
``` |
| ```
             "lower_frequency_limit",
             "upper_frequency_limit",
             "effects"
       ]
 }
``` |

### Code Listing 2.

### Second Method

In the second method, the MPEG_haptics.noise_function object may be embedded in the MPEG_haptics.effect object. Table 9 shows such an implementation of the MPEG_haptics.effect object.

**Table 9.**

| **Property** | **Type** | **Defaul t** | **Description** | **Required** |
|---|---|---|---|---|
| id | integer | N/A | ID of an effect. For any effect from the effect library and any "Reference" effect, the value shall be defined and be equal to or greater than zero. For all other effects the property shall not be defined. For any non-"Reference" effect from the effect library , the value shall be unique in the perception. | Conditiona l |
| effect_type | enum<string> | N/A | Indicates the type of haptic effect. Effect-type value equals one of: "Basis", "Composite", "Reference", and "Noise". | Yes |
| semantic_keyword s | string | N/A | Semantic keywords included with the effect. | No |
| position | integer | N/A | Indicates the temporal or spatial position of the effect according to the perception modalities in Table 4. In the case of temporal, position/timescale is the temporal position in seconds. The value shall be equal to or greater than zero. In a band where band_type = "WaveletWave", this property shall only exist for the first effect (and no other). For any other band type, the property is required. | Conditiona l |
| phase | number | 0 | Phase of the effect for Transient and Vectorial bands. The value should be in the range [0,2π], | No |
| base_signal | enum<string> | Sine | Indicates the type of the waveform signal for transient and vectorial wave bands. Possible values are: | No |
| | | | "Sine" | |
| | | | "Square" | |
| | | | "Triangle" | |
| | | | "SawToothUp" | |
| | | | "SawTooth Down" | |
| composition | array<MPEG_haptics.effect> | N/A | This attribute may only be used with composite effects. It contains a list of effects. This type of effect does not directly contain keyframes. | No |
| noise_function | MPEG_haptics_noise_functio n | N/A | The noise function object uses to generate the band signal if effect_type is "Noise" | Conditiona l |
| keyframes | array<MPEG_haptics. keyframe> | N/A | List of MPEG_haptics.keyframes. This property is required for basis effects. If the keyframes array is empty, the effect does not contain haptic data. This property shall not exist when band_type="WaveletWave ". | No |
| wavelet_stream | string | N/A | Base64 encoding with most significant bit first (conformant to RFC 4648) of the encoded wavelet stream. This property shall exist only when band_type="WaveletWave ". | Conditiona l |

Code Listing 3 shows an example JSON schema associated with Table 9.

| |
|---|
| ```
 {
       "$schema" : "http://json-schema.org/draft-04/schema",
       "title" : "MPEG_haptics_effect",
       "type" : "object",
       "properties" : {
             "id": {
                   "type": "integer",
                   "description": "Unique ID of an effect. This attribute
 is only required for library effects and "Reference" effects. For
 "Reference" effects, it corresponds to the ID of the library effect
 being referenced.",
                   "minimum": 0
             },
             "effect_type": {
                   "type": "string",
                   "enum": ["Basis", "Composite", "Reference", "Noise"],
                   "description": "Indicates the type of haptic effect.
 Effect-type value equals one of: "Basis", "Composite", "Reference",
 and "Noise"."
             },
             "semantic_keywords": {
``` |
| ```
                   "type": "string",
                   "description": "Semantic keywords included with the
 effect."
             },
             "position": {
                   "type": "integer",
                   "description": "Indicates the temporal or spatial
 position of the effect. In the case of temporal, position/timescale
 is the temporal position in seconds.",
                   "minimum": 0
             },
             "phase": {
                   "type": "number",
                   "description": "Phase of the effect",
                   "minimum": 0.0,
                   "maximum": 6.28318,
                   "default": 0
             },
             "base_signal":{
                   "type": "string",
                   "enum": ["Sine", "Square", "Triangle", "SawToothUp",
 "SawToothDown"],
                   "description": "Indicates the type of the waveform
 signal. This property is required for vectorial wave bands.",
                   "default": "Sine"
             },
             "composition": {
                   "type": "array",
                   "items":{
                         "effect":{
                               "type": "object",
                               "$ref": "MPEG_haptics.effect.schema.json"
                         }
``` |
| ```
                   }
             },
           "Haptic_noiseFunction": {
                   "type": "object",
                   "$ref": "MPEG_haptics.noiseFunction.schema.json"
                   "description": " The noise function object uses to
 generate the band signal if band_type is "Noise""
             },
             "keyframes": {
                   "type": "array",
                   "description": "List of keyframes. This property is
 required for basis effects. If the keyframes array is empty, the
 effect does not contain haptic data.",
                   "items": {
                         "type": "object",
                         "$ref": "MPEG_haptics.keyframe.schema.json"
                   }
             },
             "wavelet_stream":{
                   "type": "string",
                   "description": "Base64 encoding of the encoded wavelet
 stream. This property is defined only in WaveletWave bands."
             }
       },
       "required": [
             "effect_type"
       ]
 }
``` |

### Code Listing 3.

### Examples

Code Listing 4 shows an example haptic_noiseFunction object, which describes 5 seconds and 100 samples of random white noise.

| |
|---|
| ```
 {
    "noise_type" : "Random",
   "duration" : 5,
    "samples_count": 100,
 }
``` |

### Code Listing 4.

Code Listing 5 shows an example haptic_noiseFunction object, which describes 10 seconds with 500 samples of a Perlin noise seed.

| |
|---|
| ```
 {
    "noise_type" : "Random",
    "seed" : 2108,
   "duration" : 10,
    "samples_count": 500,
    "amplitude" : 0.5,
    "frequency" : 100,
    "octaves_count" : 2,
    "interpolation_type" : "Cosine"
 }
``` |

### Code Listing 5.

This application is meant to be pushed to the coming MPEG-I standard. This application references the standard MPEG 137 input document, *WD on the Coded Representation of Haptics* - *Phase 1*, ISO/IEC JTC 1/SC 29/WG 2, m58748, MPEG 137, (Jan. 2022). This application also references the standard *Text of ISO*/*IEC FDIS 23090-31 MPEG Haptics Coding,* ISO/IEC JTC 1/SC 29/WG 7, N00832, 23090-31, (Jan. 2024) ("*ISO*/*IEC 23090-31*")*.*

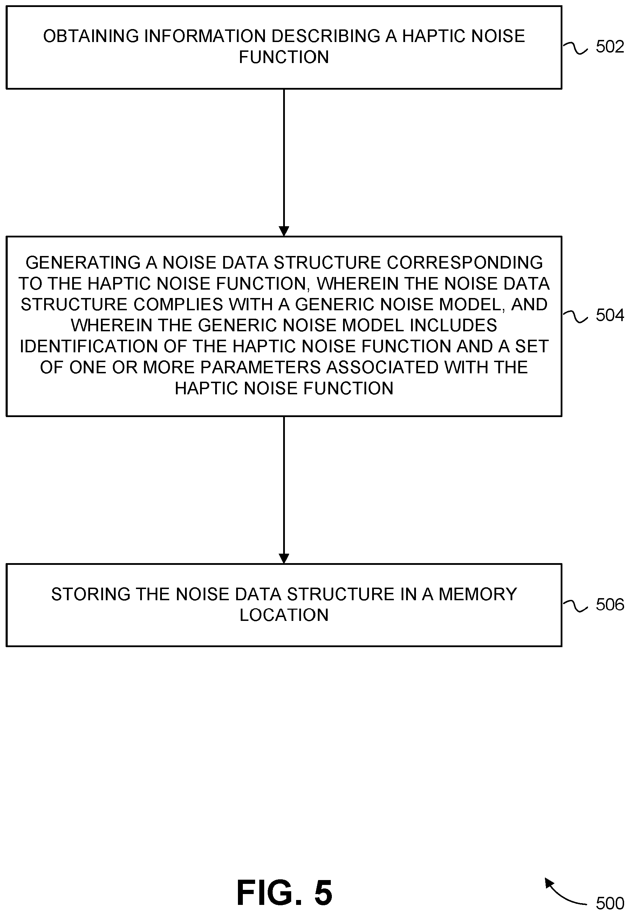

FIG. 5 is a flowchart illustrating an example process for generating a haptic noise data structure according to some embodiments. For some embodiments, an example process 500 may include obtaining 502 information describing a haptic noise function. For some embodiments, the example process 500 may further include generating 504 a noise data structure corresponding to the haptic noise function, wherein the noise data structure complies with a generic noise model, and wherein the generic noise model comprises identification of the haptic noise function and a set of one or more parameters associated with the haptic noise function. For some embodiments, the example process 500 may further include storing 506 the noise data structure in a memory location.

A first example method in accordance with some embodiments may include storing a haptic noise signal using a noise data structure and a haptic noise function. A second example method in accordance with some embodiments may include a method to store haptic noise signal using noise function allowing to greatly lower the bitrate required to store noisy data. A third example method in accordance with some embodiments may include a data transmission format for distributing the noise information using a human-readable format or using a binary stream.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information describing a haptic noise function; generating a noise data structure corresponding to the haptic noise function, wherein the noise data structure complies with a generic noise model, and wherein the generic noise model comprises identification of the haptic noise function and a set of one or more parameters associated with the haptic noise function; and storing the noise data structure in a memory location.

Some embodiments of the example method further include sending at least a portion of the noise data structure to an external device.

Some embodiments of the example method further include generating a noise signal corresponding to the haptic noise function.

Some embodiments of the example method further include combining the noise signal with a haptic signal.

Some embodiments of the example method further include encoding the noise signal.

For some embodiments of the example method, a noise type of the haptic noise function comprises one of random noise, Gaussian noise, value noise, Perlin noise, Simplex noise, Open Simplex noise, and Voronoi noise.

For some embodiments of the example method, the set of one or more parameters comprises at least one of a seed, a duration, a number of samples, and an amplitude of the haptic noise function.

For some embodiments of the example method, the information comprises a noise band type at a haptic band data structure level.

For some embodiments of the example method, the information comprises a noise effect type at a haptic effect data structure level.

For some embodiments of the example method, the information describing the haptic noise function comprises one or more data parameters corresponding to the haptic noise function.

For some embodiments of the example method, the noise data structure comprises a data object structure, the data object structure comprises one or more data elements, and the one or more data elements comprise one or more items of a set comprising noise type, seed value, duration, sample count, and amplitude corresponding to the haptic noise function.

For some embodiments of the example method, the one or more data elements comprise one or more items of a second set comprising frequency, noise color, number of interpolation steps, number of octaves, and interpolation type.

For some embodiments of the example method, the noise data structure complies with a JSON-based structure scheme.

For some embodiments of the example method, the noise data structure complies with an MPEG-based haptic standard.

An example apparatus in accordance with some embodiments may include: a processor; and a memory storing instructions operative, when executed by the processor, to cause the apparatus to perform the method of any one of the claims listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information describing a haptic noise function;
generating a noise data structure corresponding to the haptic noise function,
wherein the noise data structure complies with a generic noise model, and
wherein the generic noise model comprises identification of the haptic noise function and a set of one or more parameters associated with the haptic noise function; and
storing the noise data structure in a memory location.

2. The method of claim 1, further comprising sending at least a portion of the noise data structure to an external device.

3. The method of any one of claims 1-2, further comprising generating a noise signal corresponding to the haptic noise function.

4. The method of claim 3, further comprising combining the noise signal with a haptic signal.

5. The method of any one of claims 3-4, further comprising encoding the noise signal.

6. The method of any one of claims 1-5, wherein a noise type of the haptic noise function comprises one of random noise, Gaussian noise, value noise, Perlin noise, Simplex noise, Open Simplex noise, and Voronoi noise.

7. The method of any one of claims 1-6, wherein the set of one or more parameters comprises at least one of a seed, a duration, a number of samples, and an amplitude of the haptic noise function.

8. The method of any one of claims 1-7, wherein the information comprises a noise band type at a haptic band data structure level.

9. The method of any one of claims 1-7, wherein the information comprises a noise effect type at a haptic effect data structure level.

10. The method of any one of claims 1-9, wherein the information describing the haptic noise function comprises one or more data parameters corresponding to the haptic noise function.

11. The method of any one of claims 1-10,
wherein the noise data structure comprises a data object structure,
wherein the data object structure comprises one or more data elements, and
wherein the one or more data elements comprise one or more items of a set comprising noise type, seed value, duration, sample count, and amplitude corresponding to the haptic noise function.

12. The method of claim 11, wherein the one or more data elements comprise one or more items of a second set comprising frequency, noise color, number of interpolation steps, number of octaves, and interpolation type.

13. The method of any one of claims 1-12, wherein the noise data structure complies with a JSON-based structure scheme.

14. The method of any one of claims 1-13, wherein the noise data structure complies with an MPEG-based haptic standard.

15. An apparatus comprising:
a processor; and
a memory storing instructions operative, when executed by the processor, to cause the apparatus to perform the method of any one of claims 1 through 14.
